# EUROPEAN PATENT SPECIFICATION

(11) **EP 4 577 485 B1**
(45) Date of publication and mention of the grant of the patent: **18.11.2026**
(21) Application number: 23761860.8
(22) Date of filing: 24.08.2023
(51) Int. Cl.: B66C 1/10, F03D 1/06, F03D 13/00

(54) **COUNTERWEIGHT TOOL**
GEGENGEWICHTSWERKZEUG
OUTIL DE CONTREPOIDS

(30) Priority: 24.08.2022 DK PA202270418
(43) Date of publication of application: 02.07.2025
(73) Proprietor: Liftra IP ApS, 9200 Aalborg SV (DK)
(72) Inventor: FENGER, Per Eske, 9575 Terndrup (DK)
(74) Representative: Münzer, Marc Eric
(86) International application number: PCT/EP2023/073259
(87) International publication number: WO 2024/042177

(56) References cited:
- EP-A1- 3 670 421
- CN-A- 113 443 544

## Description

The current invention relates to a counterweight tool for use during the construction and maintenance of wind turbines.

The term counterweight tool refers to a mechanical structure with a weight element attached to a lever arm which can be used to balance the weight of another component during lifting or other maintenance/construction operations. One application of a counterweight tool is when lifting a mechanical component where the position of the component to be lifted is such that a crane lifting hook cannot be arranged directly above the component. In this case, a counterweight tool can be attached to the component and then a crane lifting hook can be attached to the counterweight tool to lift the component together with the counterweight tool.

Another application of a counterweight tool is during the mounting of turbine blades on a rotor hub. Prior to mounting all the blades, the rotor hub is unbalanced and is difficult to turn via the main shaft of the turbine. In this case, a counterweight tool can be attached to one blade location prior to mounting the blade. The counterweight tool can then create balance on the rotor and make it easier to turn the rotor to the correct location for mounting the blades. Once the rotor has been turned to the correct position, the rotor can be locked in position and the counterweight tool removed.

### Description of related art

There are many examples of counterweight tools in the prior art. One example of a counterweight tool used for lifting components is disclosed in WO2020127478-A1 which discloses the preamble of claim 1. Other examples are provided in CN108190725-B and WO2022112250-A1. However, in these applications, the component to be lifted is arranged essentially underneath the counterweight tool and only small shifts in the centre of gravity are possible.

An example of a counterweight tool for balancing the rotor during mounting of the blades is disclosed in EP2650537-A1. In this case the counterweight tool is provided with a joint such that the counterweight tool can fold together to exert very little counterweight or fold out such that it can exert a much greater counterweight.

While not directly relevant to the current invention, US8960747-B2 discloses an invention directed to a form of lifting yoke for a wind turbine component which is arranged to allow the centre of gravity of the load to be adjusted in order to allow the angle of the component to be adjusted while hanging from the crane.

Recently there have been two developments in the field of wind turbine construction and maintenance which have had a significant effect on the methods and tools used in the field. The first is that the size of the wind turbines has increased significantly and all the components have therefore become heavier. With regards to counterweight tools, this increases the size of the weight element necessary which thereby also increases the required lifting capacity of the crane.

Secondly, instead of using ground mounted cranes, it has become more common to use self-hoisted or nacelle mounted cranes which are attached at or near the top of the wind turbine tower. Since the cranes have to be lifted to the top of the wind turbine tower, it is not desired to increase the size and strength (reach) of the cranes more than necessary. Therefore, reducing the weight and size of the counterweight tools which need to be lifted by the crane is of great interest.

In this respect it is noted that the total weight of the counterweight tool can be reduced by increasing the length of the counterweight tool to allow the weight element to be placed further away from the component to be lifted. However, this makes the tool larger and more bulky to lift. This typically requires a crane with a greater reach/size to keep the tool from colliding with the nacelle or tower during the lifting. Likewise, reducing the length of the counterweight tool reduces the size of the tool, but increases the required weight of the weight element. Since the crane must lift the combined weight of the component to be lifted and the counterweight tool, reducing the weight of the weight element is of interest.

Likewise, it is also desired to reduce the complexity of counterweight tools. Hence, providing tools which do not require any power sources, like electrical or hydraulic power, is of interest.

### Summary of the invention

A counterweight tool according to the invention is defined in claim 1. Methods of lifting and lowering a component are defined in claims 9 and 10. Preferred embodiments are defined in claims 2 to 8.

In this way, the counterweight tool can be lifted in its first position up to the component to be lifted. In the first position, the horizontal dimension of the tool is quite small and the lifting wire of the crane can be arranged quite close to the base of the crane. Then once the attachment element is attached to the component to be lifted, the lever arm can be folded out using just the lifting force from the crane without the need for any power sources or powered actuators on the tool itself.

In this specification the term "crane connection point" should be understood as the point at which the lifting force from the crane passes through the counterweight tool. Moving this point horizontally will cause the counterweight tool to adapt different orientations in space. In the example embodiments provided in the figures, the crane connection points are physical lifting eyes or shackles to which the crane hook or lifting slings can be directly connected. Hence in the example embodiments for the lifting application of the counterweight tool, there are two physically separate connections for attaching a hook. However, within the scope of this application, a displacement mechanism could be provided instead where the horizontal position of the crane hook with respect to the counterweight element can be adjusted to change the location at which the crane lifting force passes through the counterweight tool. One example of a displacement mechanism is an adjustable triangular cable arrangement, where the lengths of the sides of the triangles can be adjusted to displace the hook location. Hence, a system with a displacement mechanism which can be placed into two separate positions, would also be considered to be a counterweight tool with a first and a second crane connection point.

It should also be noted that in the description there are frequent mentions to "crane lifting cable". While the term "cable" is used, other forms of suitable flexible elongated structures like ropes, wires, chains, slings, etc should also be included in this term as should be clear to the person skilled in the art.

In some embodiments, the component of a wind turbine which is to be lifted is a shaft with or without shaft bearings or a gearbox. The component could also be a rotor hub. In some embodiments, the attachment element is an attachment flange. In some embodiments, the attachment flange comprises a bolt hole pattern which matches a bolt pattern on the component to be lifted.

In some embodiments, the difference between the first and second angles is greater than 40 degrees, greater than 50 degrees or greater than 60 degrees. In some embodiments, the angle is between 80 and 90 degrees. In some embodiments, when a crane lifts the counterweight tool by the first crane connection point, the lever arm will be arranged at an angle to the vertical of less than 20 degrees, less than 15 degrees or less than 10 degrees. In some embodiments, if the lever arm is curved or has another non-linear shape, the "angle of the lever arm" can be defined by the angle of the line connecting the pivot point and the centre of gravity of the combined lever arm and weight element.

In some embodiments, the lever arm further comprises a second crane connection point fastened to the lever arm at a location between the attachment element and the first crane connection point or fastened to the attachment element.

In some embodiments, the distance between the attachment element and the first crane connection point is less than the distance between the weight element and the first crane connection point. In some embodiments, the first crane connection point is located at a point between the attachment element and the centre of gravity of the counterweight element or at a point between the weight element and the centre of gravity of the counterweight element.

In some embodiments, the distance between the attachment element and the first crane connection point is less than 35%, less than 30% or less than 25% of the length of the lever arm.

In some embodiments, the counterweight tool comprises a plurality of detachable weight elements. In this way, one or more weight elements can be added to increase the counterweight effect of the counterweight tool, or one or more weight elements can be removed to decrease the counterweight effect of the counterweight tool. This can be used to tune the behaviour of the counterweight tool to fit the component which is to be lifted.

In some embodiments, the connection between the lever arm and the attachment element is a pivotable hinge connection. In some embodiments, the pivotable hinge connection is detachable such that the lever arm can be detached from the attachment element. In this way, the attachment element can be installed on the component first and then the lever arm and weight element can be lifted up to and connected to the attachment element after the attachment element is installed.

In some embodiments, the counterweight tool comprises an adjustment mechanism to allow the horizontal position of the crane lifting cable relative to the attachment element to be adjusted. In some embodiments, the adjusting mechanism comprises a flexible tensioning mechanism connected to the crane lifting cable to displace the crane lifting cable. In some embodiments, the adjusting mechanism comprises an adjustable cable arrangement to which the crane lifting cable is attached.

In some embodiments, the counterweight tool further comprises a second locking mechanism to lock the position of the lever arm with respect to the attachment element in the first position.

The current specification also discloses a method of transferring a component of a wind turbine from the nacelle of the wind turbine to the ground, using a counterweight tool as provided in this specification. The method comprises the steps of:
a. attaching a crane lifting cable to the first crane connection point of the counterweight tool,
b. lifting the counterweight tool to the component in the nacelle,
c. attaching the attachment element of the counterweight tool to the component,
d. lifting or lowering the lever arm of the counterweight tool via the crane until the lever arm is in its second position,
e. locking the lever arm in its second position,
f. moving the crane lifting cable to the second crane connection point of the counterweight tool, and
g. lifting the component and the counterweight tool and moving it to the ground.

The specification also discloses a method of transferring a component of a wind turbine from the ground to the nacelle of a wind turbine using a counterweight tool as provided in this specification. The method comprises the steps of:
h. attaching the component to the attachment element of the counterweight tool,
i. attaching a crane lifting cable to the second crane connection point of the counterweight tool
j. lifting the component and the counterweight tool to the desired component location,
k. attaching the component to the wind turbine nacelle
l. moving the crane lifting cable from the second crane connection point to the first crane connection point,
m. unlocking the lever arm from the attachment element,
n. lowering or lifting the crane hook to pivot the lever arm to its first position,
o. detaching the attachment element from the component, and
p. lowering the counterweight tool to the ground.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. **It** should be emphasized that the embodiments shown are used for example purposes only.
Figure 1 shows a perspective view of the top portion of a wind turbine tower with a self-hoisting crane attached to the top of the nacelle and a first embodiment of a counterweight tool in a first position being lifted by the crane.
Figure 2 shows a side view of the arrangement of figure 1.
Figure 3 shows a side view of the arrangement of figure 1 where the counterweight tool has been lifted and attached to the gear box of the wind turbine.
Figure 4 shows a close-up view of the area defined by the circle IV in figure 3.
Figure 5 shows a side view of the arrangement of figure 1 where the lever arm of the counterweight tool is being pivoted from its first position to its second position.
Figure 6 shows a close-up view of the area defined by the circle VI in figure 5.
Figure 7 shows a side view of the arrangement of figure 1 where the lever arm of the counterweight tool has been locked in its second position.
Figure 8 shows a close-up view of the area defined by the circle VIII in figure 7.
Figure 9 shows a side view of the arrangement of figure 1 where the lifting cable of the crane has been moved to a second lifting position on the counterweight tool.
Figure 10 shows a close-up view of the area defined by the circle X in figure 9.
Figure 11 shows a side view of the arrangement of figure 1 where the crane has lifted the counterweight tool and the attached gearbox free of the nacelle.
Figure 12 shows a schematic side view of a first step of installing a second embodiment of a counterweight tool on a component to be lifted.
Figure 13 shows a second step of installing the counterweight tool of figure 12.
Figure 14 shows a third step in installing the counterweight tool of figure 12.
Figure 15 shows the counterweight tool of figure 12 installed on the component and ready to be lifted by a crane.
Figure 16 shows a schematic side view of a first step of installing a third embodiment of a counterweight tool on a rotor hub.
Figure 17 shows an intermediate step of installing the counterweight tool of figure 16.
Figure 18 shows a fourth embodiment of a counterweight tool attached to a rotor in its first position.
Figure 19 shows the counterweight tool of figure 18 in its second position.

### Detailed description of the embodiments

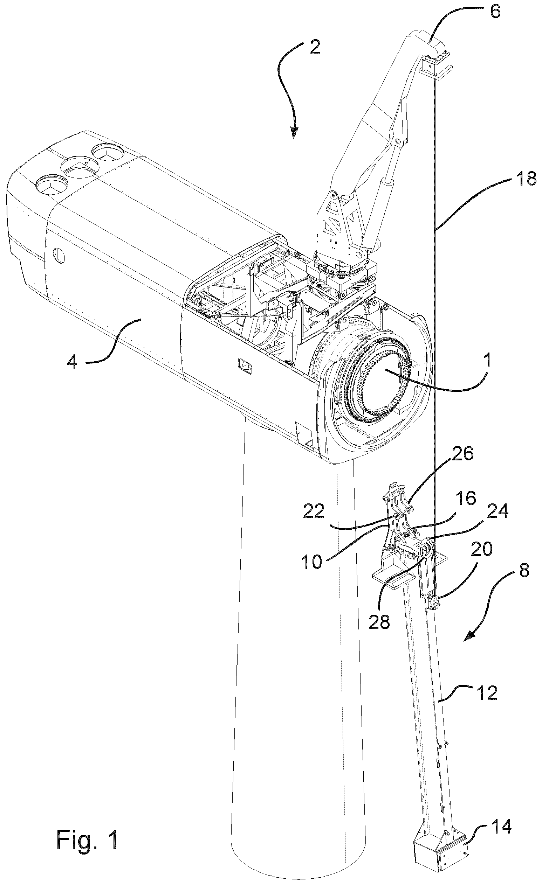

Figures 1 to 11 show different steps of a method for lifting a gearbox 1 of a wind turbine 2 with a nacelle mounted crane 6 and a first embodiment of a counterweight tool 8 according to the invention. **In** the figures, the method for transferring the gearbox from the nacelle 4 of the wind turbine to the ground is shown. However, a similar procedure, run in reverse can also be used to transfer a gearbox from the ground to the nacelle. While the counterweight tool 8 of the current invention is shown in use with a self-hoisted nacelle mounted crane, it should be clear to the person skilled in the art that the counterweight tool of the current invention can also be used with other forms of nacelle or tower mounted cranes as well as with different types of ground based crane.

**It** should be noted from the figures, that the gearbox in this example embodiment of a wind turbine is mounted directly underneath the crane itself. Due to this location, it is not possible for the crane to lift the gearbox directly as the crane itself blocks access to the top of the gearbox. This is true for many cases where a self-hoisting or other form of nacelle mounted crane is used. In other types of wind turbines, the gearbox could be mounted further back in the nacelle. In these cases, it might be possible for nacelle mounted crane to directly lift the gearbox and a counterweight tool would not be necessary. However, in most wind turbines, there will always be some form of component located underneath the crane itself. Hence, counterweight tools are applicable to many types of wind turbines.

It should also be noted that in the figures a procedure for lifting the gearbox is shown, however, it should be clear that a similar procedure could be used for lifting other components. One example is for use in exchanging the main shaft together with or without the shaft bearings.

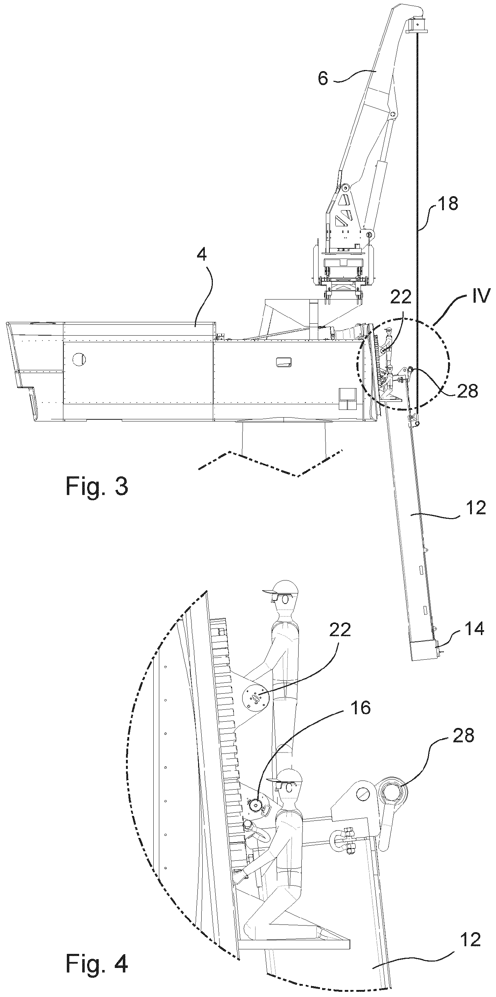

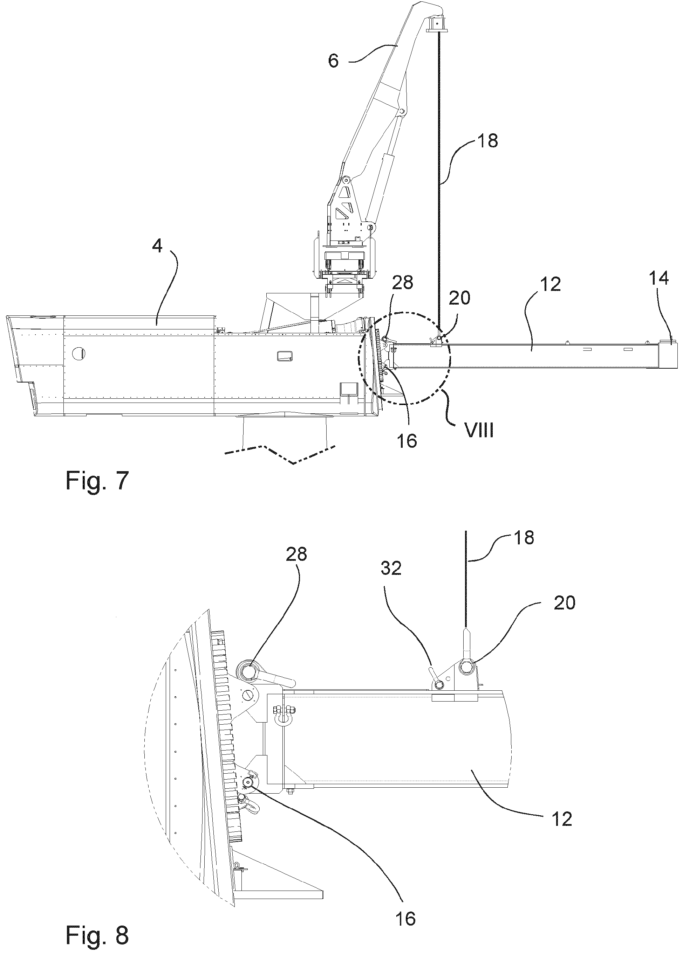

As shown in the figures, the counterweight tool 8 has an attachment flange or attachment plate 10, a lever arm 12 and a weight element in the form of a stack of weight plates 14 attached to the lever arm at one end thereof. The lever arm 12 is pivotably connected to the attachment flange via a hinge joint 16 at an end of the lever arm which is opposite to the stack of weight plates. As can be seen by comparing figures 3 and 7, the lever arm has two main positions, a first position where the lever arm is arranged essentially vertically (figure 3) pointing downwards from the attachment flange and a second position where the lever arm is arranged essentially horizontally (figure 7) pointing out from the attachment flange.

In the first position, the horizontal dimension of the counterweight tool is small, and therefore, the counterweight tool can be arranged quite close to the nacelle while lifting the tool to the nacelle. This reduces the moment arm on the crane by bringing the crane lifting cable 18 closer to the base of the crane, thereby reducing the horizontal distance between the crane lifting cable and the crane base. As will be known to the person skilled in the art, when the crane lifting cable is closer to the crane base, the crane can lift larger loads than when the crane lifting cable is farther away from the crane base.

Note that in this embodiment, the actual angle of the lever arm is around 5 degrees from the vertical. While arranging the lever arm completely vertically would reduce the horizontal dimension of the counterweight tool the most, in most cases, due to the placement of the lifting points, the geometry of the tool and the weight of the different components of the tool, the lever arm will not be completely vertical.

In the second position, the weight element is located farther away from the component to be lifted and thereby the counterweight effect of the tool is increased.

The procedure for lifting the gearbox from the nacelle to the ground is now described in more detail with reference to figures 1-11.

In a first step, a crane lifting cable 18 is attached to a first crane connection point 20 on the counterweight tool. Details of the type of crane lifting cable, crane hook, connection point, etc. are not provided here as they are well known to the person skilled in the art and can assume different forms. In general, the invention can be used with different types of connections between the crane and the counterweight tool, for example, slings, cables, chains, trunnions, lugs, shackles, etc.

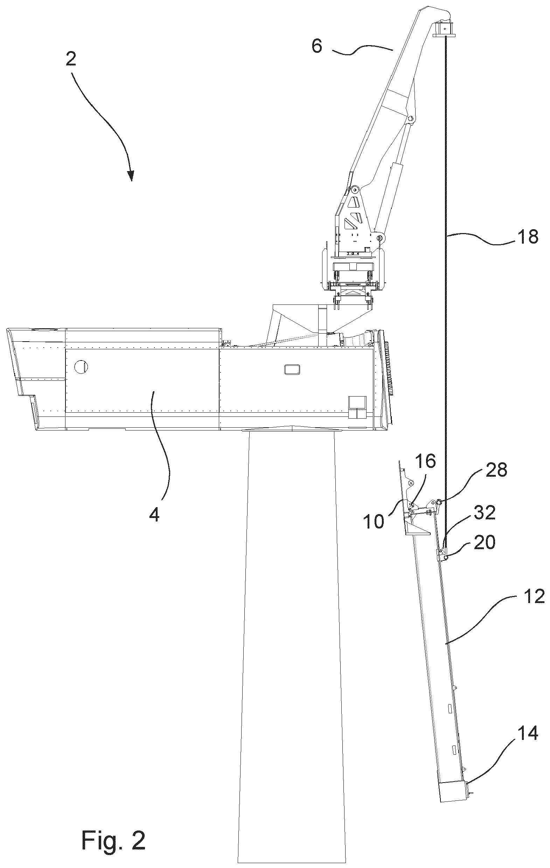

The crane then lifts the counterweight tool as shown in figures 1 and 2. Due to the arrangement of the tool and the placement of the first crane connection point on the lever arm close to the attachment flange and far from the weight element, the lever arm will assume its first position with the weight element pivoting the lever arm downwardly. The horizontal dimension of the counterweight tool is therefore small, allowing the counterweight tool to be lifted close along the tower of the wind turbine without colliding with the tower.

When the counterweight tool has been lifted to the nacelle, the attachment flange is attached to the gearbox as shown in figures 3 and 4. It can be understood that the angle of the lever arm can be calculated since the geometry of the tool, the placement of the crane attachment points as well as the weight of the weight element is known. The placement of the gearbox is also well known and the placement and orientation of the intended interface between the gearbox and the attachment flange is also well known. Hence, the position of the attachment flange with respect to the lever arm is fixed in the desired orientation prior to starting the lifting operation. Hence, when the counterweight tool reaches the gearbox, the attachment flange is ready to be directly attached to the gearbox. While not shown in detail, a locking mechanism can be provided between the attachment flange and the lever arm, to ensure the correct positioning of the attachment flange in the initial lifting operation.

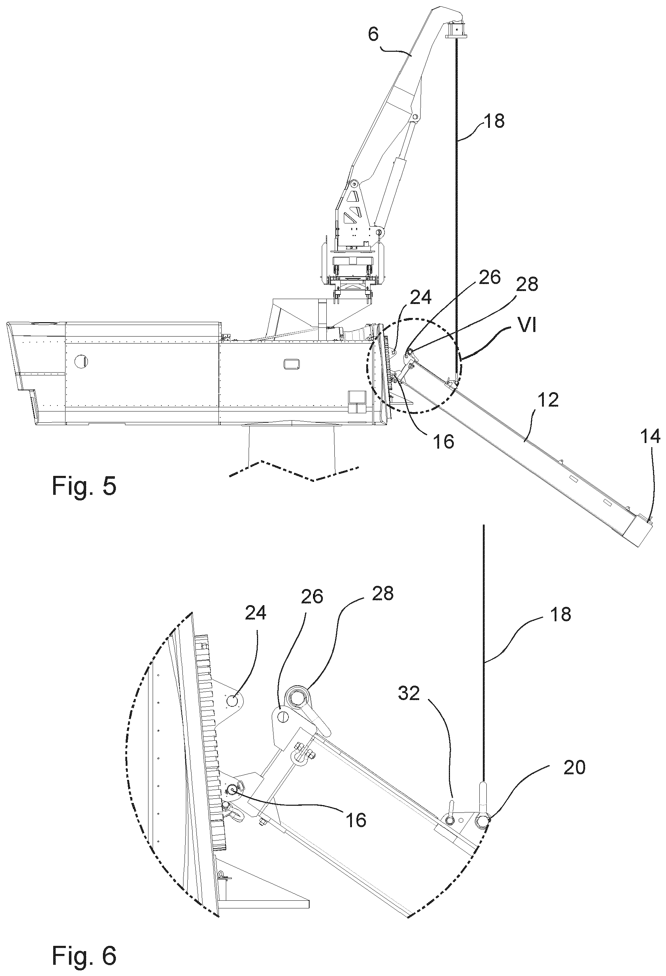

Once the attachment flange has been attached to the gearbox, further lifting of the counterweight tool by the crane, will not displace the attachment flange further, since the attachment flange is now locked in place to the gearbox which is still locked in place with respect to the nacelle. As the crane lifts further, the lever arm will therefore start to pivot outwardly, as shown in figures 5 and 6. When the lever arm is in the horizontal position, the crane stops lifting and a locking pin 22 is inserted into the flanges 24, 26 on the attachment flange and the lever arm respectively to lock the position of the lever arm with respect to the attachment flange (and also the gearbox). The flanges 24, 26 and pin 22 can be considered as a form of locking mechanism which locks the position of the lever arm with respect to the attachment flange. Other suitable forms of locking mechanism could be provided by the person skilled in the art of mechanical structures.

Due the arrangement of the pivotable connection between the lever arm and the attachment flange and the placement of the first crane connection point on the lever arm relative to the pivot point, it is possible to move the lever arm from the first position to the second position, using just the lifting force of the crane. There is no need for any hydraulic or electrical power sources or actuators on the counterweight tool itself. This greatly simplifies the counterweight tool as well as the installation procedure.

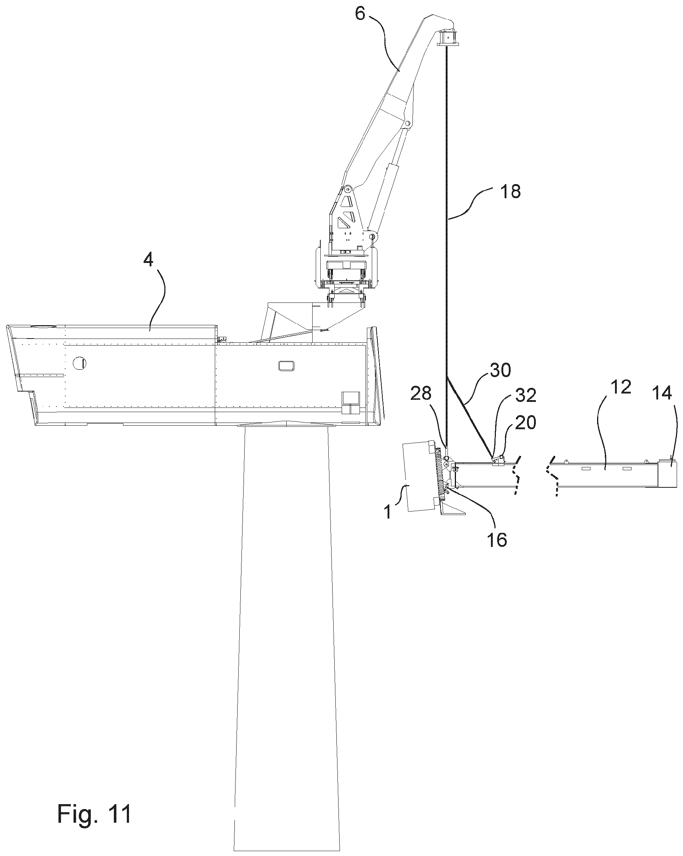

Once the lever arm is locked in position, the crane lifting cable 18 is released from the first crane connection point on the lever arm and moved to the second crane connection point 28. This brings the lifting point closer to the crane base thereby also increasing the weight which the crane can lift. The position of the second crane connection point is located at essentially the same horizontal location as the centre of gravity of the combined counterweight tool and the gearbox. The gearbox can now be detached from the nacelle and the gearbox lifted out of the nacelle as shown in figure 11.

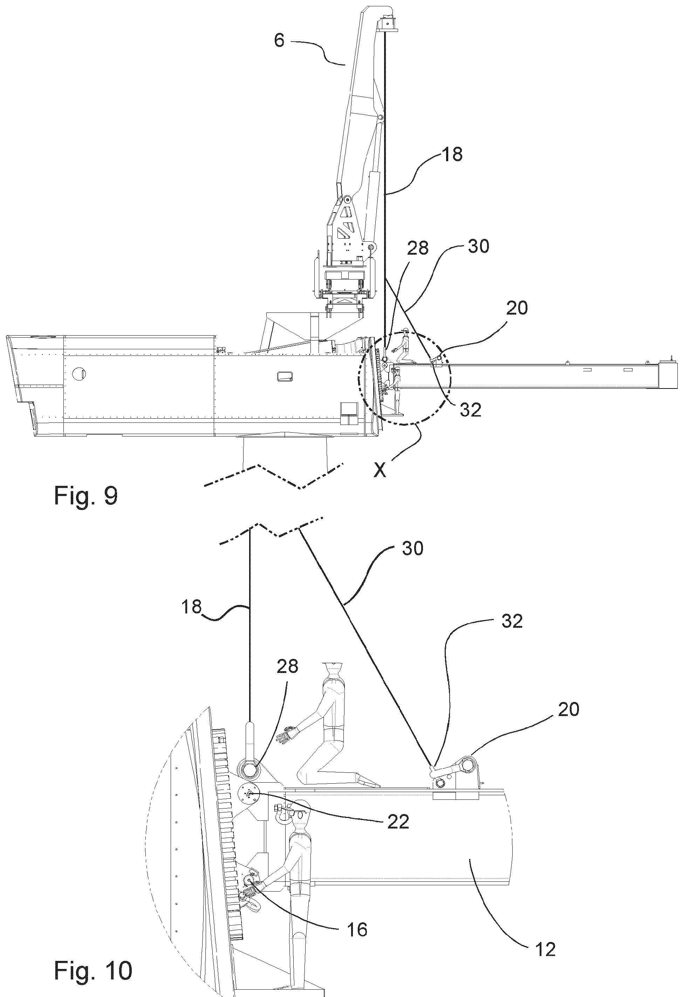

From figures 9-11, it can be seen that in this embodiment, an additional cable 30 is connected between the crane lifting cable 18 and a third attachment point 32. By tensioning this additional cable 30, it is possible to fine tune the horizontal position of the lifting point of the crane with respect to the counterweight tool. As the lifting position is adjusted, the angle of the counterweight tool with respect to the nacelle can be fine-tuned. It is also possible to add or remove weight plates from the stack of weight plates 14 to adjust the counterweight tool to correctly match the actual component which is to be lifted.

In another embodiment (not shown) the angular position of the lever arm with respect to the attachment flange could be locked in different positions to tune the centre of gravity of the combined counterweight tool and component combination. By angling the lever arm more downwards with respect to the attachment flange, the counterweight effect of the weight element will be reduced. In another embodiment (not shown), instead of adding or removing weight plates from a stack, the position of a constant weight element on the lever arm could be adjusted. Placing the weight element further from the attachment plate, increases the counterweight effect of the counterweight tool, while placing the weight closer to the attachment plate reduces the counterweight effect of the tool.

It should also be noted, that by exchanging the attachment plate or flange with different attachment plates or other forms of attachment element, the counterweight tool can be changed to fit different components to be lifted. For example, when lifting the main shaft of the turbine, one type of attachment element can be provided and when lifting a gearbox, another form of attachment element can be provided. The attachment element can therefore be custom made for different components to be lifted, while maintaining the same lever arm and weight element.

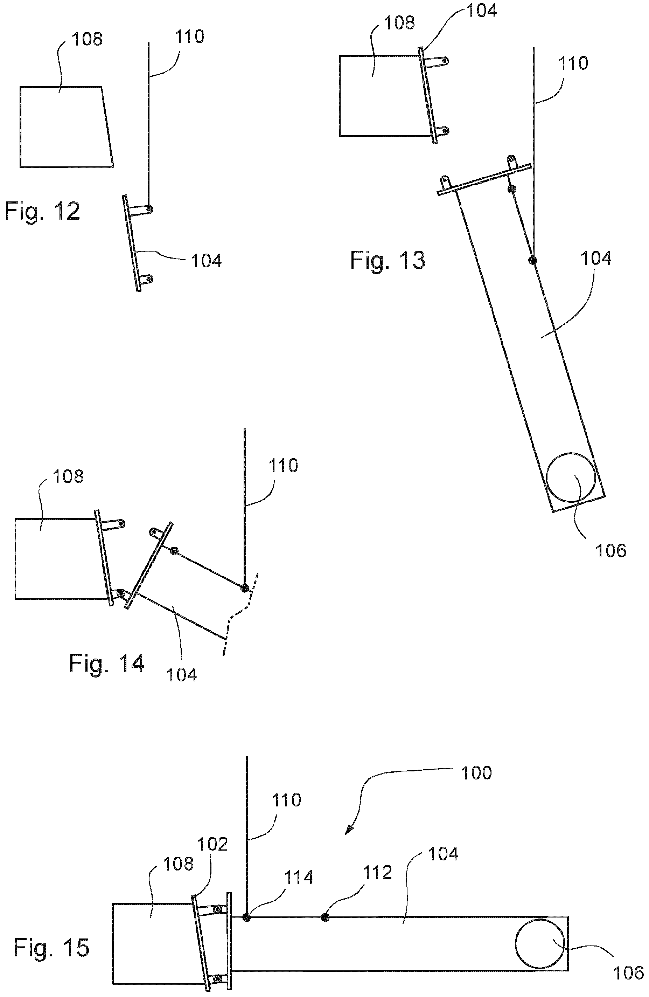

Figures 12-15 show a second embodiment of a counterweight tool 100 which also comprises an attachment flange 102, a lever arm 104 and a weight element 106. This embodiment is quite similar in function to the first embodiment and as such it will not be described in great detail. The main difference is that the attachment flange 102 and the lever arm 104 are detached from each other during the initial lifting operation. The attachment flange 102 is lifted into position first and attached to the component to be lifted 108 (figure 12). Once the attachment flange is in place, the combined lever arm 104 and weight element 106 is lifted to the attachment flange and connected to the attachment flange (figure 13), where after the lever arm is pivoted into position (figure 14) and locked in its second position (figure 15) as with the first procedure. The crane lifting cable 110 can then be moved from the first crane connection point 112 to the second crane connection point 114. The component to be lifted 108 and the counterweight tool 100 can then be lifted.

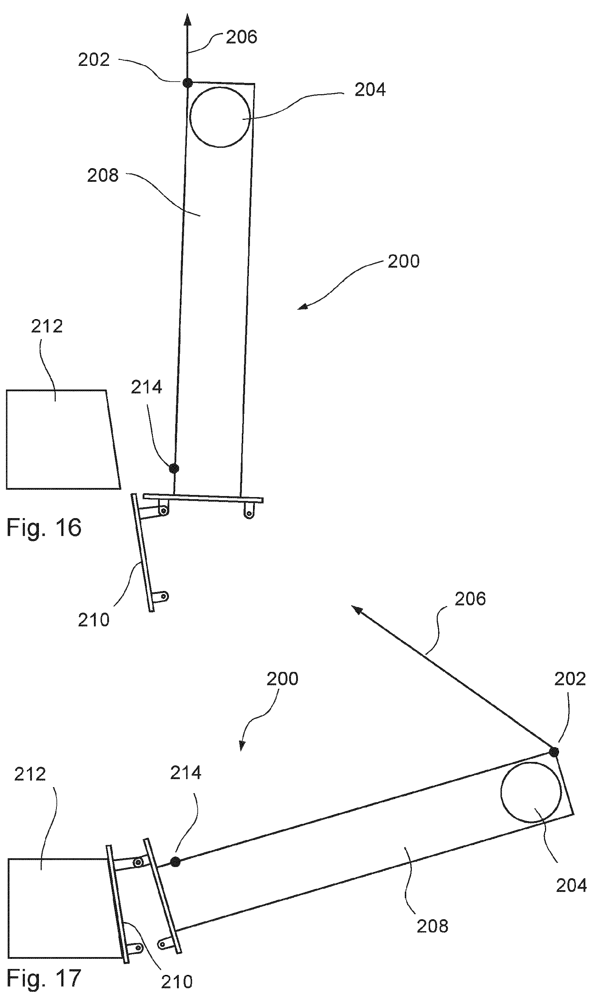

Figures 16-17 show a third embodiment of a counterweight tool 200. This embodiment is again similar in principle to the first embodiment and as such it will not be described in detail. The main difference is that in this embodiment, the first crane connection point 202 is located close to the weight element 204 itself and the crane lifting cable 206 thereby lifts the counterweight element from the tip of the lever arm 208. In this way, the orientation of the lever arm in the first position is reversed with respect to the attachment flange 210. In the first position, the lever arm is therefore pointed upwards away from the attachment plate. The lever arm is still essentially vertical when being lifted into position, but the attachment flange is located at the bottom of the lever arm during the lifting instead of at the top. The crane therefore needs to lift the majority of the counterweight tool past the component to be lifted 212. When the attachment flange reaches the component, the attachment flange is attached to the component. The crane can then then lower the counterweight element instead of lifting it. Since the attachment flange is fixed to the component to be lifted, lowering the counterweight tool allows the lever arm to pivot outwardly and downwardly. When the lever arm is horizontal, it is locked in position. The crane lifting cable can then be moved to the second crane connection point 214 and the combined component and tool can then be lifted as in the other embodiments.

In the above description, a procedure for lifting the component to be lifted from the nacelle to the ground is described. However, a similar procedure could be performed in reverse to lift a component from the ground to the nacelle. In this case, the lever arm is put into its second position with respect to the attachment flange and locked in position. The attachment flange is then attached to the component to be lifted and the crane lifting cable is attached to the second crane connection point. The combined tool and component is then lifted to the nacelle. Once the component is fastened to the nacelle, the crane lifting cable is transferred to the first crane connection point, the locking mechanism is released and the crane lowers, or lifts the lever arm depending on the embodiment, to put the lever arm into its first position. The attachment flange can then be detached from the component and the counterweight tool lowered to the ground.

While the above description and the figures have shown the lever arms in a roughly horizontal position in the second position, it should be clear to the person skilled in the art, the lever arm could also be arranged at angles which are not completely horizontal.

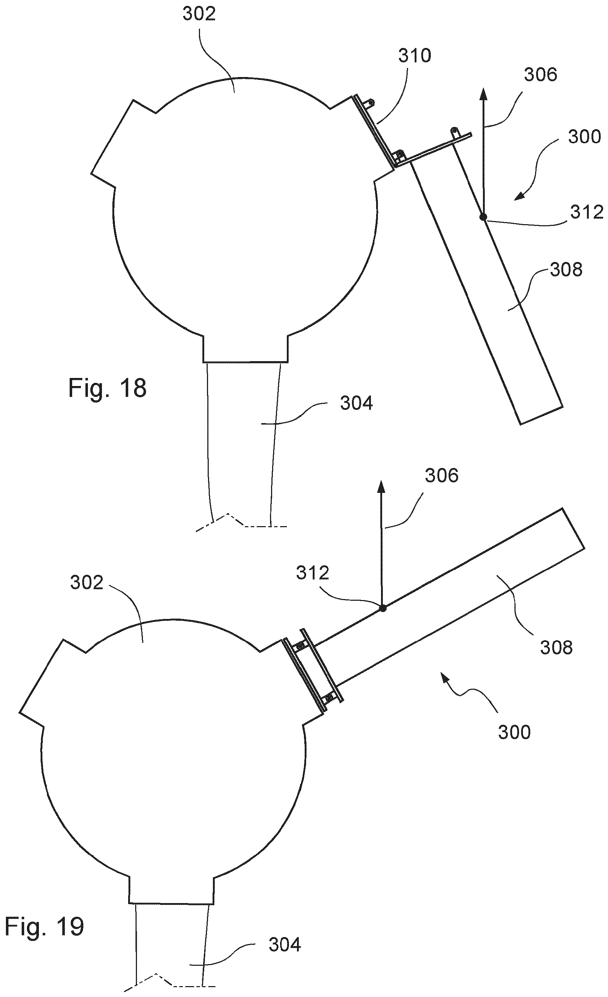

Figures 18 and 19 show an example embodiment of a counterweight tool 300 used to help rotate a rotor hub 302 when mounting blades 304 on the hub. Typically the blades are attached to the hub with the blades in a horizontal position. Due to this, the rotor hub needs to be rotated such that the blade mounting location is in the correct position for mounting the blade in the horizontal position. Turning the rotor hub when one or two blades are mounted is difficult since the rotor hub is unbalanced. A counterweight tool can then be attached to the hub at a free blade location to provide more balance to the rotor hub, thereby making it easier to rotate the hub into the desired position.

In this embodiment, a blade 304 has been mounted in the horizontal position and then the rotor hub has been rotated to put the blade in the downward pointing position (figure 18). The counterweight tool 300 is then lifted up in its first position and attached to the hub (figure 18). Then the crane lifting cable 306 further lifts the counterweight tool, thereby causing the lever arm 308 to pivot upwardly. When the lever arm is in its second position, the lever arm is locked in position (figure 19) with respect to the attachment flange 310. It should be noted that in this embodiment of a counterweight tool, only a single crane connection point 312 is provided since the counterweight tool is not used to lift the rotor itself, just turn it. Also, note that by lifting further on the counterweight tool, once locked into position on the hub, it is possible to use the crane to rotate the hub in a counterclockwise direction (in the arrangement shown in the figures) and that by lowering the counterweight tool, once locked into position on the hub, the weight of the tool can be used to rotate the hub in the opposite direction.

**It** should be noted that in this embodiment, the lever arm 308 itself is provided as a combined lever arm and weight element and no separately identifiable weight element is provided. However, for the sake of this specification, the tool of this embodiment still comprises a lever arm and a weight element, but the weight element has just been incorporated into beam itself.

**It** is to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific manufacturing procedures have not been described in detail since it is maintained that the person skilled in the art would be able to find suitable materials and suitable processes to manufacture the counterweight tool according to the current invention.

## Claims

1. A counterweight tool (8) comprising
*a*. an attachment element (10),
*b.* a lever arm (12),
*c*. a weight element (14),
*d.* a first locking mechanism (22,24,26), and
*e*. a first crane connection point (20),
*f*. said attachment element being arranged to be attachable to a component (1) of a wind turbine (2),
*g*. **characterized in that** said lever arm is pivotably connected to the attachment element about a pivot point (16), said lever arm being pivotable between a first position where the lever arm is arranged at a first angle with respect to the attachment element and a second position where the lever arm is arranged at a second angle with respect to the attachment element, the difference between the first and second angles being greater than 25 degrees,
*h.* said weight element being attached to the lever arm at a distance from the pivot point,
*i.* said first locking mechanism being arranged to lock the position of the lever arm with respect to the attachment element in the second position,
*j.* said first crane connection point being located on either:
*i*. the lever arm at a distance from the pivot point or
*ii.* on the weight element,
*k.* said first crane connection point being arranged such that prior to attaching the attachment element to a component, when a crane lifts the counterweight tool, or just the lever arm and weight element, by the first crane connection point, the lever arm will be arranged at an angle to the vertical of less than 30 degrees and
*l*. **in that** when the attachment element is fixed in position relative to the crane and the attachment element is pivotably connected to the lever arm, then lifting or lowering by the crane via the first crane connection point will cause the lever arm to pivot about the pivot point from the first position to the second position.

2. A counterweight tool (8) according to claim 1, **characterized in that** said lever arm (12) further comprises a second crane connection point (28) fastened to the lever arm at a location between the attachment element (10) and the first crane connection point (20).

3. A counterweight tool (8) according to claim 1 or 2, **characterized in that** distance between the attachment element (10) and the first crane connection point (20) is less than the distance between the weight element (14) and the first crane connection point (20).

4. A counterweight tool (8) according to any one of claims 1 to 3, **characterized in that** the distance between the attachment element (10) and the first crane connection point (20) is less than 35% of the length of the lever arm (12).

5. A counterweight tool (8) according to any one of claims 1 to 4, **characterized in that** said counterweight tool comprises a plurality of detachable weight elements (14).

6. A counterweight tool (8) according to any one of claims 1 to 5, **characterized in that** the connection between the lever arm (12) and the attachment element (10) is a pivotable hinge connection (16).

7. A counterweight tool (8) according to any one of claims 1 to 6, **characterized in that** the counterweight tool comprises an adjustment mechanism (30) to allow the horizontal position of the crane lifting cable (18) relative to the attachment element (10) to be adjusted.

8. A counterweight tool (8) according to any one of claims 1 to 7, **characterized in that** the counterweight tool further comprises a second locking mechanism to lock the position of the lever arm (12) with respect to the attachment element (10) in the first position.

9. A method of transferring a component (1) of a wind turbine (2) from a nacelle (4) of the wind turbine to the ground, using a counterweight tool (8) according to claim 2 or to claim 2 and any one of claims 3 to 8, said method comprising the steps of:
a. attaching a crane lifting cable (18) to the first crane connection point (20) of the counterweight tool,
b. lifting the counterweight tool to the component,
c. attaching the attachment element (10) of the counterweight tool to the component,
d. lifting or lowering the lever arm (12) of the counterweight tool via the crane until it is in its second position,
e. locking the lever arm in the second position,
f. moving the crane lifting cable to the second crane connection point (28) of the counterweight tool, and
g. lifting the component and the counterweight tool and moving it to the ground.

10. A method of transferring a component (1) of a wind turbine (2) from the ground to the nacelle (4) of a wind turbine using a counterweight tool (8) according to claim 2 or claim 2 and any one of claims 3 to 8, said method comprising the steps of:
a. attaching the component to the attachment element (10) of the counterweight tool,
b. attaching a crane lifting cable (18) to the second crane connection (28) point of the counterweight tool,
c. lifting the component and the counterweight tool to the desired component location,
d. attaching the component to the wind turbine nacelle (4),
e. moving the crane lifting cable from the second crane connection point to the first crane connection point (20),
f. unlocking the lever arm (12) from the attachment element,
g. lowering or lifting the lever arm via the crane to pivot the lever arm to its first position,
h. detaching the attachment element from the component, and
i. lowering the counterweight tool to the ground.

## Patentansprüche

1. Gegengewichtswerkzeug (8), umfassend
*a.* ein Befestigungselement (10),
*b.* einen Hebelarm (12),
*c.* ein Gewichtselement (14),
*d.* einen ersten Verriegelungsmechanismus (22, 24, 26), und
*e.* einen ersten Kranverbindungspunkt (20),
*f.* wobei das Befestigungselement dazu angeordnet ist, an einer Komponente (1) einer Windturbine (2) befestigbar zu sein,
*g.* **gekennzeichnet dadurch, dass** der Hebelarm mit dem Befestigungselement schwenkbar um einen Schwenkpunkt (16) verbunden ist, wobei der Hebelarm zwischen einer ersten Position, in der der Hebelarm in einem ersten Winkel in Bezug auf das Befestigungselement angeordnet ist, und einer zweiten Position, in der der Hebelarm in einem zweiten Winkel in Bezug auf das Befestigungselement angeordnet ist, schwenkbar ist, wobei der Unterschied zwischen dem ersten und dem zweiten Winkel größer als 25 Grad ist,
*h.* wobei das Gewichtselement in einem Abstand von dem Schwenkpunkt an dem Hebelarm befestigt ist,
*i.* wobei der erste Verriegelungsmechanismus dazu angeordnet ist, die Position des Hebelarms in Bezug auf das Befestigungselement in der zweiten Position zu verriegeln,
*j.* wobei der erste Kranverbindungspunkt sich entweder:
*i.* an dem Hebelarm in einem Abstand zu dem Schwenkpunkt oder
*ii.* an dem Gewichtselement befindet,
*k.* wobei der erste Kranverbindungspunkt so angeordnet ist, dass vor dem Befestigen des Befestigungselements an einer Komponente, wenn ein Kran das Gegengewichtswerkzeug oder nur den Hebelarm und das Gewichtselement durch den ersten Kranverbindungspunkt hebt, der Hebelarm in einem Winkel zur Senkrechten von weniger als 30 Grad angeordnet sein wird, und
*l.* dadurch, dass, wenn das Befestigungselement in Position relativ zu dem Kran fixiert ist und das Befestigungselement schwenkbar mit dem Hebelarm verbunden ist, das Heben oder Senken durch den Kran über den ersten Kranverbindungspunkt den Hebelarm dazu veranlassen wird, sich um den Schwenkpunkt von der ersten Position in die zweite Position zu schwenken.

2. Gegengewichtswerkzeug (8) nach Anspruch 1, **gekennzeichnet dadurch, dass** der Hebelarm (12) ferner einen zweiten Kranverbindungspunkt (28) umfasst, der an dem Hebelarm an einem Ort zwischen dem Befestigungselement (10) und dem ersten Kranverbindungspunkt (20) angebracht ist.

3. Gegengewichtswerkzeug (8) nach Anspruch 1 oder 2, **gekennzeichnet dadurch, dass** der Abstand zwischen dem Befestigungselement (10) und dem ersten Kranverbindungspunkt (20) geringer ist als der Abstand zwischen dem Gewichtselement (14) und dem ersten Kranverbindungspunkt (20).

4. Gegengewichtswerkzeug (8) nach einem der Ansprüche 1 bis 3, **gekennzeichnet dadurch, dass** der Abstand zwischen dem Befestigungselement (10) und dem ersten Kranverbindungspunkt (20) geringer ist als 35 % der Länge des Hebelarms (12).

5. Gegengewichtswerkzeug (8) nach einem der Ansprüche 1 bis 4, **gekennzeichnet dadurch, dass** das Gegengewichtswerkzeug eine Vielzahl von ablösbaren Gewichtselementen (14) umfasst.

6. Gegengewichtswerkzeug (8) nach einem der Ansprüche 1 bis 5, **gekennzeichnet dadurch, dass** die Verbindung zwischen dem Hebelarm (12) und dem Befestigungselement (10) eine schwenkbare Scharnierverbindung (16) ist.

7. Gegengewichtswerkzeug (8) nach einem der Ansprüche 1 bis 6, **gekennzeichnet dadurch, dass** das Gegengewichtswerkzeug einen Anpassungsmechanismus (30) umfasst, um zu erlauben, dass die horizontale Position des Kranhebekabels (18) relativ zu dem Befestigungselement (10) angepasst wird.

8. Gegengewichtswerkzeug (8) nach einem der Ansprüche 1 bis 7, **gekennzeichnet dadurch, dass** das Gegengewichtswerkzeug ferner einen zweiten Verriegelungsmechanismus umfasst, um die Position des Hebelarms (12) in Bezug auf das Befestigungselement (10) in der ersten Position zu verriegeln.

9. Verfahren zum Übertragen einer Komponente (1) einer Windturbine (2) von einer Gondel (4) der Windturbine zum Boden unter Verwendung eines Gegengewichtswerkzeugs (8) nach Anspruch 2 oder nach Anspruch 2 und einem der Ansprüche 3 bis 8, wobei das Verfahren die folgenden Schritte umfasst:
a. Befestigen eines Kranhebekabels (18) an dem ersten Kranverbindungspunkt (20) des Gegengewichtswerkzeugs,
b. Heben des Gegengewichtswerkzeugs zu der Komponente,
c. Befestigen des Befestigungselements (10) des Gegengewichtswerkzeugs an der Komponente,
d. Heben oder Senken des Hebelarms (12) des Gegengewichtswerkzeugs über den Kran, bis er in seiner zweiten Position ist,
e. Verriegeln des Hebelarms in der zweiten Position,
f. Bewegen des Kranhebekabels zu dem zweiten Kranverbindungspunkt (28) des Gegengewichtswerkzeugs, und
g. Heben der Komponente und des Gegengewichtswerkzeugs und Bewegen der Komponente zum Boden.

10. Verfahren zum Übertragen einer Komponente (1) einer Windturbine (2) vom Boden zur Gondel (4) einer Windturbine unter Verwendung eines Gegengewichtswerkzeugs (8) nach Anspruch 2 oder nach Anspruch 2 und einem der Ansprüche 3 bis 8, wobei das Verfahren die folgenden Schritte umfasst:
a. Befestigen der Komponente an dem Befestigungselement (10) des Gegengewichtswerkzeugs,
b. Befestigen eines Kranhebekabels (18) an dem zweiten Kranverbindungspunkt (28) des Gegengewichtswerkzeugs,
c. Heben der Komponente und des Gegengewichtswerkzeugs an den gewünschten Komponentenort,
d. Befestigen der Komponente an der Windturbinengondel (4),
e. Bewegen des Kranhebekabels von dem zweiten Kranverbindungspunkt zu dem ersten Kranverbindungspunkt (20),
f. Entriegeln des Hebelarms (12) von dem Befestigungselement,
g. Senken oder Heben des Hebelarms über den Kran, um den Hebelarm in seine erste Position zu schwenken,
h. Ablösen des Befestigungselements von der Komponente, und
i. Senken des Gegengewichtswerkzeugs zum Boden.

## Revendications

1. Outil de contrepoids (8) comprenant
*a.* un élément de fixation (10),
*b.* un bras de levier (12),
*c.* un élément de lestage (14),
*d.* un premier mécanisme de verrouillage (22, 24, 26), et
*e.* un premier point de raccordement à la grue (20),
*f.* ledit élément de fixation étant agencé pour pouvoir être fixé à un composant (1) d'une éolienne (2),
*g.* **caractérisé en ce que** ledit bras de levier est relié de manière pivotante à l'élément de fixation autour d'un point de pivot (16), ledit bras de levier pouvant pivoter entre une première position dans laquelle le bras de levier est agencé selon un premier angle par rapport à l'élément de fixation et une deuxième position dans laquelle le bras de levier est agencé selon un deuxième angle par rapport à l'élément de fixation, la différence entre les premier et deuxième angles étant supérieure à 25 degrés,
*h.* ledit élément de lestage étant fixé au bras de levier à une distance du point de pivot,
*i.* ledit premier mécanisme de verrouillage étant agencé pour verrouiller la position du bras de levier par rapport à l'élément de fixation dans la deuxième position,
*j.* ledit premier point de raccordement à la grue se situant soit :
*i.* sur le bras de levier à une certaine distance du point de pivot soit
*ii.* sur l'élément de lestage,
*k.* ledit premier point de raccordement à la grue étant agencé de telle sorte qu'avant de fixer l'élément de fixation à un composant, lorsqu'une grue soulève l'outil de contrepoids, ou simplement le bras de levier et l'élément de lestage, par le premier point de raccordement à la grue, le bras de levier sera agencé selon un angle par rapport à la verticale inférieur à 30 degrés et
*l.* **en ce que**, lorsque l'élément de fixation est maintenu en position par rapport à la grue et que l'élément de fixation est relié de manière pivotante au bras de levier, le levage ou l'abaissement par la grue via le premier point de raccordement à la grue amènera le bras de levier à pivoter autour du point de pivot, depuis la première position vers la deuxième position.

2. Outil de contrepoids (8) selon la revendication 1, **caractérisé en ce que** ledit bras de levier (12) comprend en outre un deuxième point de raccordement à la grue (28) fixé au bras de levier à un emplacement situé entre l'élément de fixation (10) et le premier point de raccordement à la grue (20).

3. Outil de contrepoids (8) selon la revendication 1 ou 2, **caractérisé en ce que** la distance entre l'élément de fixation (10) et le premier point de raccordement à la grue (20) est inférieure à la distance entre l'élément de lestage (14) et le premier point de raccordement à la grue (20).

4. Outil de contrepoids (8) selon l'une quelconque des revendications 1 à 3, **caractérisé en ce que** la distance entre l'élément de fixation (10) et le premier point de raccordement à la grue (20) est inférieure à 35 % de la longueur du bras de levier (12).

5. Outil de contrepoids (8) selon l'une quelconque des revendications 1 à 4, **caractérisé en ce que** ledit outil de contrepoids comprend une pluralité d'éléments de lestage (14) amovibles.

6. Outil de contrepoids (8) selon l'une quelconque des revendications 1 à 5, **caractérisé en ce que** la liaison entre le bras de levier (12) et l'élément de fixation (10) est une liaison articulée pivotante (16).

7. Outil de contrepoids (8) selon l'une quelconque des revendications 1 à 6, **caractérisé en ce que** l'outil de contrepoids comprend un mécanisme de réglage (30) permettant d'ajuster la position horizontale du câble de levage (18) de la grue par rapport à l'élément de fixation (10).

8. Outil de contrepoids (8) selon l'une quelconque des revendications 1 à 7, **caractérisé en ce que** l'outil de contrepoids comprend en outre un deuxième mécanisme de verrouillage destiné à verrouiller la position du bras de levier (12) par rapport à l'élément de fixation (10) dans la première position.

9. Procédé de transfert d'un composant (1) d'une éolienne (2) depuis une nacelle (4) de l'éolienne vers le sol, à l'aide d'un outil de contrepoids (8) selon la revendication 2 ou selon la revendication 2 et l'une quelconque des revendications 3 à 8, ledit procédé comprenant les étapes suivantes :
a. la fixation d'un câble de levage (18) de la grue au premier point de raccordement à la grue (20) de l'outil de contrepoids,
b. le levage de l'outil de contrepoids jusqu'au composant,
c. la fixation de l'élément de fixation (10) de l'outil de contrepoids au composant,
d. le levage ou l'abaissement du bras de levier (12) de l'outil de contrepoids à l'aide de la grue jusqu'à ce qu'il se trouve dans sa deuxième position,
e. le verrouillage du bras de levier dans la deuxième position,
f. le déplacement du câble de levage de la grue au deuxième point de raccordement à la grue (28) de l'outil de contrepoids, et
g. le levage du composant et de l'outil de contrepoids et le déplacement de celui-ci jusqu'au sol.

10. Procédé de transfert d'un composant (1) d'une éolienne (2) depuis le sol vers la nacelle (4) d'une éolienne à l'aide d'un outil de contrepoids (8) selon la revendication 2 ou selon la revendication 2 et l'une quelconque des revendications 3 à 8, ledit procédé comprenant les étapes suivantes :
a. la fixation du composant à l'élément de fixation (10) de l'outil de contrepoids,
b. la fixation d'un câble de levage (18) de la grue au deuxième point de raccordement à la grue (28) de l'outil de contrepoids,
c. le levage du composant et de l'outil de contrepoids jusqu'à l'emplacement désiré du composant,
d. la fixation du composant à la nacelle (4) de l'éolienne,
e. le déplacement du câble de levage de la grue du deuxième point de raccordement à la grue au premier point de raccordement à la grue (20),
f. le déverrouillage du bras de levier (12) de l'élément de fixation,
g. l'abaissement ou le levage du bras de levier à l'aide de la grue pour faire pivoter le bras de levier jusqu'à sa première position,
h. le détachement de l'élément de fixation du composant, et
i. l'abaissement de l'outil de contrepoids jusqu'au sol.
